# EUROPEAN PATENT SPECIFICATION

(11) **EP 4 199 614 B1**
(45) Date of publication and mention of the grant of the patent: **11.03.2026**
(21) Application number: 20949032.5
(22) Date of filing: 12.08.2020
(51) Int. Cl.: H04W 48/12, H04L 1/00, H04L 1/08, H04W 8/22, H04L 5/00

(54) **RMSI CONFIGURATION METHOD AND APPARATUS, USER EQUIPMENT, NETWORK DEVICE, AND STORAGE MEDIUM**
RMSI-KONFIGURATIONSVERFAHREN UND -VORRICHTUNG, BENUTZERGERÄT, NETZWERKVORRICHTUNG UND SPEICHERMEDIUM
PROCÉDÉ ET APPAREIL DE CONFIGURATION RMSI, ÉQUIPEMENT UTILISATEUR, DISPOSITIF DE RÉSEAU ET SUPPORT DE STOCKAGE

(43) Date of publication of application: 21.06.2023
(73) Proprietor: Beijing Xiaomi Mobile Software Co., Ltd., Beijing 100085 (CN)
(72) Inventor: MU, Qin, Beijing 100085 (CN)
(74) Representative: dompatent
(86) International application number: PCT/CN2020/108726
(87) International publication number: WO 2022/032533

(56) References cited:
- CN-A- 109 600 832
- CN-A- 110 352 624
- CN-A- 110 463 258
- CN-A- 111 095 968
- CN-A- 111 525 995
- CN-A- 111 525 995
- CN-A- 111 567 126
- US-A1- 2019 215 119
- US-A1- 2020 053 811
- US-A1- 2021 360 510
- US-A1- 2022 272 581
- QUALCOMM INCORPORATED: "Standardization Framework and Design Principles for NR RedCap Devices", vol. RAN WG1, no. e-Meeting; 20200817 - 20200828, 8 August 2020 (2020-08-08), XP052348186, Retrieved from the Internet <URL:https://ftp.3gpp.org/tsg_ran/WG1_RL1/TSGR1_102-e/Docs/R1-2006814.zip R1-2006814 Standardization Framework and Design Principles for NR RedCap Devices.docx> [retrieved on 20200808]
- XIAOMI COMMUNICATIONS: "General views on Higher-layer impacts for Redcap devices", vol. RAN WG2, no. electronic; 20200817 - 20200828, 7 August 2020 (2020-08-07), XP052359854, Retrieved from the Internet <URL:https://ftp.3gpp.org/tsg_ran/WG2_RL2/TSGR2_111-e/Docs/R2-2006732.zip R2-2006732 General views on Higher-layer impacts for Redcap devices-0807.doc> [retrieved on 20200807]

## Description

### TECHNICAL FIELD

The present disclosure relates to configuration of remaining minimum system information (RMSI).

### BACKGROUND

With the introduction of a reduced capability NR (Redcap) terminal, the processing capability and the coverage capability of the Redcap terminal are very different from those of a normal NR terminal. The scheduling and transmission of an existing RMSI is designed based on the processing capability and the coverage capability of the normal NR terminal. Thus, in some cases, the transmission of the RMSI in the current system is not suitable for the Redcap terminal.

Chinese Patent No. CN 111 525 995 A discloses a data transmission method, a corresponding network device, and a corresponding terminal device.

### SUMMARY

The invention is defined by the subject-matter of the independent claims. Preferred embodiments are set out in the dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of embodiments of the present disclosure.
FIG. 1 is a schematic diagram illustrating a wireless communication system according to an illustrative embodiment.
FIG. 2 is a flowchart illustrating a method for configuring RMSI according to an illustrative embodiment.
FIG. 3 is a flowchart illustrating a method for configuring RMSI according to an illustrative embodiment.
FIG. 4 is a schematic diagram illustrating an apparatus for configuring RMSI according to an illustrative embodiment.
FIG. 5 is a schematic diagram illustrating an apparatus for configuring RMSI according to an illustrative embodiment.
FIG. 6 is a block diagram illustrating a user equipment 600 according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the disclosure as recited in the appended claims.

Terms used in embodiments of the present disclosure are for describing some embodiments only, and are not intended to limit the embodiments of the present disclosure. As used in embodiments of the present disclosure and the appended claims, "a/an", "said" and "the" in singular forms are also intended to include plural forms unless the context clearly indicates otherwise. It could also be understood that the term "and/or" as used herein refers to and includes any and all possible combinations of one or more associated listed items.

It could be understood that although the embodiments of the present disclosure may use the terms "first", "second", "third", etc. to describe various information, but the information is not limited to these terms. These terms are only used to distinguish information of the same type from each other. For example, without departing from the scope of embodiments of the present disclosure, first information may also be called second information, and similarly second information may also be called first information. Depending on the context, the word "if" as used herein may be interpreted as "upon" or "when" or "in response to determining".

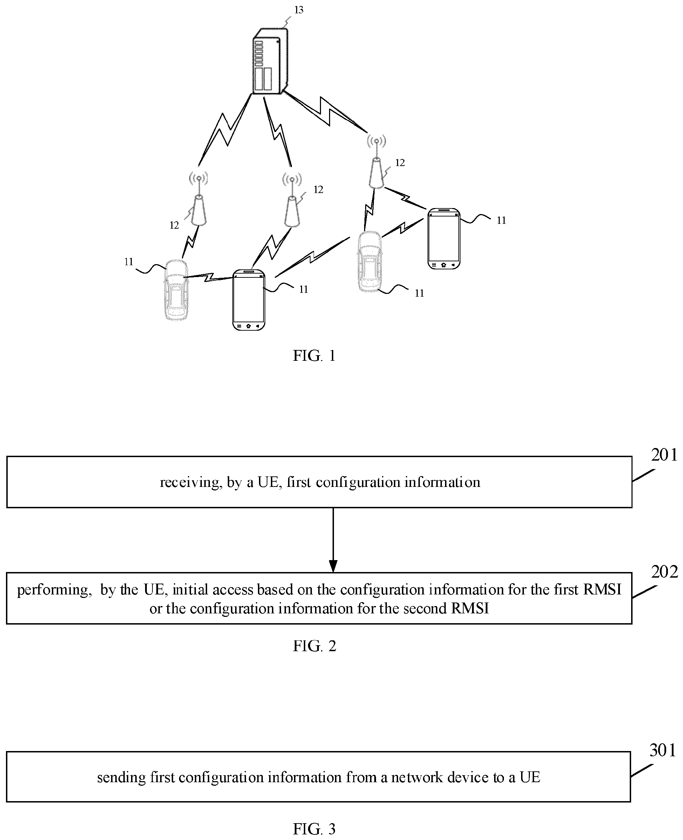

FIG. 1 is a schematic diagram illustrating a wireless communication system according to an illustrative embodiment. As shown in FIG. 1, the wireless communication system is a communication system based on cellular mobile communication technology, and the wireless communication system may include a plurality of terminals 11 and a plurality of base stations 12.

The terminal 11 may be a device that provides voice and/or data connectivity to a user. The terminal 11 may communicate with one or more core networks via a radio access network (RAN). The terminal 11 may be an Internet of Things terminal, such as a sensor device, a mobile phone (or called a "cellular" phone) and a computer having an Internet of Things terminal. For example, the terminal 11 may be a fixed, portable, pocket, hand-held, built-in computer or vehicle-mounted device. For example, the terminal 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a trip computer with a wireless communication function, or a wireless communication device externally connected to the trip computer. Alternatively, the terminal 11 may also be a roadside device, for example, it may be a street lamp, a signal lamp, or other roadside devices with a wireless communication function.

The base station 12 may be a network side device in a wireless communication system. The wireless communication system may be the fourth generation mobile communication technology (4G) system, also known as a long term evolution (LTE) system. Alternatively, the wireless communication system may also be the fifth generation mobile communication technology (5G) system, also called a new radio (NR) system or 5G NR system. Alternatively, the wireless communication system may also be a next generation system of the 5G system. An access network in the 5G system may be called a new generation-radio access network (NG-RAN). Alternatively, the wireless communication system may also be a MTC system.

The base station 12 may be an evolved base station (eNB) adopted in a 4G system. Alternatively, the base station 12 may also be a central distributed architecture base station (gNB) in the 5G system. When the base station 12 adopts a central distributed architecture, the base station 12 generally includes a central unit (CU) and at least two distributed units (DU). The central unit is provided with a protocol stack of a packet data convergence protocol (PDCP) layer, a radio link control (RLC) layer, or a media access control (MAC) layer. A protocol stack of a physical (PHY) layer is provided in the distributed unit. The specific implementation manner of the base station 12 is not limited in embodiments of the present disclosure.

A wireless connection may be established between the base station 12 and the terminal 11 through a wireless air interface. In some embodiments, the wireless air interface is a wireless air interface based on the fourth generation mobile communication network technology (4G) standard. Alternatively, the wireless air interface is a wireless air interface based on the fifth generation mobile communication network technology (5G) standard. For example, the wireless air interface is a new radio. Alternatively, the wireless air interface may also be a wireless air interface based on a next generation mobile communication network technology standard based on 5G.

In some embodiments, an E2E (end to end) connection may also be established between terminals 11, such as a V2V (vehicle to vehicle) communication, a V2I (vehicle to infrastructure) communication and a V2P (vehicle to pedestrian) communication in vehicle to everything (V2X) communication scenes.

In some embodiments, the above-mentioned wireless communication system may further include a network management device 13.

A plurality of base stations 12 are connected to the network management device 13 respectively. The network management device 13 may be a core network device in the wireless communication system. For example, the network management device 13 may be a mobility management entity (MME) in an evolved packet core network (EPC). Alternatively, the network management device may also be other core network devices, such as a serving gate way (SGW), a public data network gateway (PGW), a policy and charging rules function unit (PCRF) or a home subscriber server (HSS). The implementation form of the network management device 13 is not limited in embodiments of the present disclosure.

Execution entities involved in embodiments of the present disclosure include, but are not limited to, a user equipment in a cellular mobile communication, a base station in the cellular mobile communication, and the like.

FIG. 2 is a flowchart illustrating a method for configuring RMSI according to an illustrative embodiment. As shown in FIG. 2, the method for configuring the RMSI includes the following steps 201 to 202.

In step 201, first configuration information is received by a UE.

The first configuration information includes configuration information for first RMSI and configuration information for second RMSI. The configuration information for the first RMSI is configuration information for RMSI for a first type of UE, and the configuration information for the second RMSI is configuration information for RMSI for a second type of UE.

In embodiments of the present disclosure, the configuration information mainly includes the configuration information for RMSI configured for the first type of UE and the configuration information for RMSI configured for the second type of UE. That is, configuration information for different RMSIs is provided for a Redcap UE and a normal UE, respectively, so that the Redcap UE and the normal UE may monitor the different RMSIs to perform initial access.

In embodiments of the present disclosure, a processing capability of the first type of UE is different from a processing capability of the second type of UE. Here, the processing capability includes at least one of a frequency band capability supported by the UE, an access capability, a codec capability for wireless signals, or a data processing capability. For example, in case that the first type of UE is used as a Redcap terminal, and the second type of UE is used as a normal NR terminal, the frequency band bandwidth supported by the second type of UE is 100MHz or 400MHz, and the frequency band bandwidth supported by the first type of UE is 20 to 50MHz.

Alternatively, a coverage capability of the first type of UE is different from a coverage capability of the second type of UE. In embodiments of the present disclosure, the coverage capability generally refers to a frequency band and a frequency band bandwidth supported by an antenna system of the UE, a transmit power of a transmit signal supported by the antenna system of the UE, etc.

In embodiments of the present disclosure, an aggregation degree of a PDCCH for scheduling the second RMSI is higher than an aggregation degree of a PDCCH for scheduling the first RMSI. The PDCCH carrying scheduling information for the second RMSI may be subjected to carrier aggregation by using more different frequency bands, and the PDCCH carrying scheduling information for the first RMSI may be subjected to carrier aggregation by using less frequency bands or may not be subjected to carrier aggregation.

In embodiments of the present disclosure, a PDCCH for scheduling the second RMSI uses a repeated transmission mechanism, and a PDCCH for scheduling the first RMSI does not use a repeated transmission mechanism. In order to meet access requirements of the second type of UE, multiple repeated transmissions may be performed in the PDCCH carrying the scheduling information for the second RMSI, so that the second type of UE may initiate initial access at any time based on the second RMSI repeatedly transmitted. For the first type of UE, since it does not need to initiate network access from time to time, the network is accessed only when there is data transmission or when an access period arrives. Therefore, the PDCCH for scheduling the first RMSI does not use the repeated transmission mechanism.

Alternatively, the number of repeated transmissions in the PDCCH for scheduling the first RMSI is less than the number of repeated transmissions in the PDCCH for scheduling the second RMSI. In an embodiment, repeated transmissions may also be performed in the PDCCH for scheduling the first RMSI, and the number of the repeated transmissions in the PDCCH for scheduling the first RMSI may be set to be less, as long as the network access needs of the first type of UE are satisfied. For the second type of UE, the second RMSI needs to be repeatedly transmitted to ensure normal network access of the second type of UE.

Correspondingly, in embodiments of the present disclosure, the PDSCH for scheduling the second RMSI uses the repeated transmission mechanism, and the PDSCH for scheduling the first RMSI does not use the repeated transmission mechanism. Here, corresponding to the repeated transmission mechanism used by the above-mentioned PDCCH for scheduling the second RMSI, the PDSCH for scheduling the second RMSI also needs to use the repeated transmission mechanism. The PDCCH for scheduling the first RMSI does not use the repeated transmission mechanism, and the PDSCH for scheduling the first RMSI does not use the repeated transmission mechanism.

When the number of the repeated transmissions in the PDCCH for scheduling the first RMSI is less than the number of the repeated transmissions in the PDCCH for scheduling the second RMSI, the number of repeated transmissions in the PDSCH for scheduling the first RMSI is less than the number of repeated transmissions in the PDSCH for scheduling the second RMSI.

According to the claimed invention, a transport block size (TBS) of the PDCCH for scheduling the second RMSI is smaller than a TBS of the PDCCH for scheduling the first RMSI, and/or a modulation order of the PDCCH for scheduling the second RMSI is lower than a modulation order of the PDCCH for scheduling the first RMSI. For example, a PDCCH with a TBS of 512 bits or 776 bits is used for scheduling the second RMSI, and a PDCCH with a TBS of 3824 bits is used for scheduling the first RMSI. In order to ensure a network access success rate of the second type of UE, a PDCCH with a lower modulation order or a smaller TBS index is used for scheduling the second RMSI. For example, a PDCCH with a modulation order of 2 or 4 is used for scheduling the second RMSI, and a PDCCH with a modulation order of 8 or 16 is used for scheduling the second RMSI. A PDCCH for scheduling the second RMSI has a TBS index in a range of 0 to 10, and a PDCCH for scheduling the second RMSI has a TBS index in a range of 15 to 26. In this way, the transmission accuracy of the PDCCH for scheduling the second RMSI may be guaranteed, and when the second type of UE receives the PDCCH for scheduling the second RMSI, and it may be easier for the second type of UE to demodulate the second RMSI, thus improving the accuracy of demodulating the PDCCH for scheduling the second RMSI. For the first type of UE, since real-time requirements for data transmission are relatively low, a higher modulation order or a larger TBS index may be used, so that the PDCCH for scheduling the first RMSI may carry more data.

A time interval between a PDCCH and a physical downlink shared channel (PDSCH) for scheduling the first RMSI is shorter than a time interval between a PDCCH and a PDSCH for scheduling the second RMSI. For example, the time interval between the PDCCH and the PDSCH for scheduling the second RMSI is 1 to 3 OFDM symbols, and the time interval between the PDCCH and the PDSCH for scheduling the first RMSI is 0 to 2 OFDM symbols. Similarly, in order to ensure the network access success rate of the second type of UE, the time interval between the PDCCH and the PDSCH for scheduling the second RMSI is relatively longer, so that after the second type of UE monitors the PDCCH, the second type of UE may monitor the PDSCH on the corresponding time frequency resources based on scheduling information in the PDCCH. Since the interval between the PDCCH and the PDSCH is longer, the second RMSI may be accurately obtained. For the first type of UE, since the requirements for network access are lower, the time interval between the PDCCH and the PDSCH for scheduling the first RMSI may be shorter.

In embodiments of the present disclosure, a control resource set (CORESET) carrying the PDCCH for scheduling the first RMSI is the same as a CORESET carrying the PDCCH for scheduling the second RMSI. Physical resources carrying the PDCCH for the first RMSI and physical resources carrying the PDCCH for the second RMSI may be located in the same CORESET. That is, the same CORESET resource may be used for carrying the PDCCH or DCI parameters of the first RMSI and the second RMSI simultaneously.

When the CORESET carrying the first RMSI are the same as the CORESET for carrying the second RMSI, the PDCCH for scheduling the first RMSI and the PDCCH for scheduling the second RMSI may be distinguished in the following manner.

In a manner, an aggregation degree of the PDCCH for scheduling the second RMSI is different from an aggregation degree of the PDCCH for scheduling the first RMSI. For example, the aggregation degree of the PDCCH for scheduling the second RMSI is higher than the aggregation degree of the PDCCH for scheduling the first RMSI. If it is only intended to distinguish the PDCCH for scheduling the first RMSI from the PDCCH for scheduling the second RMSI without considering the transmission efficiency, the aggregation degree of the PDCCH for scheduling the second RMSI may be lower than the PDCCH for scheduling the first RMSI.

In a manner, candidate transmission resources determined for the PDCCH for scheduling the second RMSI are different from candidate transmission resources determined for the PDCCH for scheduling the first RMSI. The different candidate transmission resources may be determined for the PDCCH for scheduling the second RMSI and the PDCCH for scheduling the first RMSI, so that the first type of UE and the second type of UE may monitor respective RMSI scheduling information on different transmission resources.

In a manner, a length of downlink control information (DCI) for scheduling the second RMSI is different from a length of DCI for scheduling the first RMSI. For example, the length of the DCI for scheduling the second RMSI may be 16 bits, and the length of the DCI for scheduling the first RMSI may be 8 bits or the like. The length of the DCI for scheduling the second RMSI may be different from the length of the DCI for scheduling the first RMSI, so that in the same CORESET, the DCIs with different lengths may be used to distinguish which DCI carries the scheduling information for the first RMSI or the scheduling information for the second RMSI.

In a manner, a scrambling code of DCI for scheduling the second RMSI is different from a scrambling code of DCI for scheduling the first RMSI. Different scrambling codes may be provided for the DCI for the second RMSI and the DCI for the first RMSI, and the first type of UE and the second type of UE respectively use the scrambling codes configured by themselves to decode the DCIs. If a UE decodes a DCI successfully, the DCI is a DCI corresponding to the UE itself. In this way, the first type of UE decodes the DCI to obtain the scheduling information for the first RMSI, and the second type of UE decodes the DCI to obtain the scheduling information for the second RMSI.

In embodiments of the present disclosure, a CORESET carrying a PDCCH for scheduling the first RMSI is different from a CORESET carrying a PDCCH for scheduling the second RMSI. That is, the CORESET for the PDCCH for scheduling the first RMSI is different from the CORESET for the PDCCH for scheduling the second RMSI, so that the first type of UE and the second type of UE may monitor their own PDCCHs on different transmission resources to obtain the scheduling information for their own RMSIs and monitor their own RMSIs on the corresponding resources.

In embodiments of the present disclosure, information carried in a PDSCH for scheduling the first RMSI is at least partially different from information carried in a PDSCH for scheduling the second RMSI. Information content in the PDSCH carrying the first RMSI is at least partially different from information content in the PDSCH carrying the second RMSI. Since the first RMSI is different from the second RMSI, the information in the PDSCH carrying the first RMSI is different from the information in the PDSCH carrying the second RMSI.

In step 202, the UE performs initial access based on the configuration information for the first RMSI or the configuration information for the second RMSI.

Specifically, the UE determines to receive the configuration information for the first RMSI or the configuration information for the second RMSI according to the type of the UE or the channel condition, and performs initial access. The UE determines whether it belongs to the first type of UE or the second type of UE according to identification information configured by the UE itself, monitors the configuration information for the first RMSI or the configuration information for the second RMSI according to the type of the UE, obtains the PDSCH carrying the first RMSI or the second RMSI according to the configuration information for the first RMSI or the configuration information for the second RMSI, and performs initial access according to the first RMSI or the second RMSI obtained.

Alternatively, the UE monitors the configuration information for the second RMSI according to channel conditions measured currently by the UE (e.g., a bit error rate of a current transmission is higher than a first set value, or a signal-to-noise ratio is lower than a second set value, or a transmission power of a signal is lower than a third set value), and the UE obtains the PDSCH carrying the second RMSI according to the configuration information for the second RMSI, and performs initial access according to the second RMSI obtained.

Alternatively, in an embodiment, no matter what type of UE the UE is, the UE may receive the configuration information for the second RMSI and perform initial access. That is, for the first type of UE, in case of insufficient system resources, the configuration information for the first RMSI is no longer transmitted. The first type of UE may also receive the configuration information for the second RMSI to perform initial access.

In embodiments of the present disclosure, the first type of UE is an Internet of Things terminal including a Redcap terminal, and its data transmission has the characteristics of Internet of Things data transmission. The second type of UE includes UEs that have 3G, 4G and 5G capabilities and support voice transmission and Internet data transmission, such as mobile phones and other terminals for ordinary calls.

FIG. 3 is a flowchart illustrating a method for configuring RMSI according to an illustrative embodiment. As shown in FIG. 3, the method for configuring the RMSI in embodiments of the present disclosure includes the following processing step 301.

In step 301, first configuration information is sent from a network device to a UE.

In embodiments of the present disclosure, the configuration information mainly includes the configuration information for RMSI configured for the first type of UE, and the configuration information for RMSI configured for the second type of UE. That is, configuration information for different RMSIs is set for a Redcap UE and a normal NR UE, respectively, so that the Redcap UE and the normal NR UE monitor the different RMSIs to perform initial access.

The UE determines to receive the configuration information for the first RMSI or the configuration information for the second RMSI according to the type of the UE or the channel condition, and performs initial access. The UE determines whether it belongs to the first type of UE or the second type of UE according to identification information configured by the UE itself, monitors the configuration information for the first RMSI or the configuration information for the second RMSI according to the type of the UE, obtains the PDSCH carrying the first RMSI or the second RMSI according to the configuration information for the first RMSI or the configuration information for the second RMSI, and performs initial access according to the first RMSI or the second RMSI obtained.

In embodiments of the present disclosure, a processing capability of the first type of UE is different from a processing capability of the second type of UE. Here, the processing capability includes at least one of a frequency band capability supported by the UE, an access capability, a codec capability for wireless signals, or a data processing capability. For example, the frequency band bandwidth supported by the second type of UE is 100MHz or 400MHz, and the frequency band bandwidth supported by the first type of UE is 20 to 50MHz.

Alternatively, a coverage capability of the first type of UE is different from a coverage capability of the second type of UE. In embodiments of the present disclosure, the coverage capability generally refers to a frequency band and a frequency band bandwidth supported by an antenna system of the UE, a transmit power of a transmit signal supported by the antenna system of the UE, etc.

In embodiments of the present disclosure, an aggregation degree of a PDCCH for scheduling the second RMSI is higher than an aggregation degree of a PDCCH for scheduling the first RMSI. The PDCCH carrying scheduling information for the second RMSI may be subjected to carrier aggregation by using more different frequency bands, and the PDCCH carrying scheduling information for the first RMSI may be subjected to carrier aggregation by using less frequency bands or may not be subjected to carrier aggregation.

In embodiments of the present disclosure, a PDCCH for scheduling the second RMSI uses a repeated transmission mechanism, and a PDCCH for scheduling the first RMSI does not use a repeated transmission mechanism. In order to meet access requirements of the second type of UE, multiple repeated transmissions may be performed in the PDCCH carrying the scheduling information for the second RMSI, so that the second type of UE may initiate initial access at any time based on the second RMSI repeatedly transmitted. For the first type of UE, since it does not need to initiate network access from time to time, the network is accessed only when there is data transmission or when an access period arrives. Therefore, the PDCCH for scheduling the first RMSI does not use the repeated transmission mechanism.

Alternatively, the number of repeated transmissions in the PDCCH for scheduling the first RMSI is less than the number of repeated transmissions in the PDCCH for scheduling the second RMSI. In an embodiment, repeated transmissions may also be performed in the PDCCH for scheduling the first RMSI, and the number of the repeated transmissions in the PDCCH for scheduling the first RMSI may be set to be less, as long as the network access needs of the first type of UE are satisfied. For the second type of UE, the second RMSI needs to be repeatedly transmitted to ensure normal network access of the second type of UE.

Correspondingly, in embodiments of the present disclosure, the PDSCH for scheduling the second RMSI uses the repeated transmission mechanism, and the PDSCH for scheduling the first RMSI does not use the repeated transmission mechanism. Here, corresponding to the repeated transmission mechanism used by the above-mentioned PDCCH for scheduling the second RMSI, the PDSCH for scheduling the second RMSI also needs to use the repeated transmission mechanism. The PDCCH for scheduling the first RMSI does not use the repeated transmission mechanism, and the PDSCH for scheduling the first RMSI does not use the repeated transmission mechanism.

When the number of the repeated transmissions in the PDCCH for scheduling the first RMSI is less than the number of the repeated transmissions in the PDCCH for scheduling the second RMSI, the number of repeated transmissions in the PDSCH for scheduling the first RMSI is less than the number of repeated transmissions in the PDSCH for scheduling the second RMSI

According to the claimed invention, a transport block size (TBS) of the PDCCH for scheduling the second RMSI is smaller than a TBS of the PDCCH for scheduling the first RMSI, and/or a modulation order of the PDCCH for scheduling the second RMSI is lower than a modulation order of the PDCCH for scheduling the first RMSI. For example, a PDCCH with a TBS of 512 bits or 776 bits is used for scheduling the second RMSI, and a PDCCH with a TBS of 3824 bits is used for scheduling the first RMSI. In order to ensure a network access success rate of the second type of UE, a PDCCH with a lower modulation order or a smaller TBS index is used for scheduling the second RMSI. For example, a PDCCH with a modulation order of 2 or 4 is used for scheduling the second RMSI, and a PDCCH with a modulation order of 8 or 16 is used for scheduling the second RMSI. A PDCCH for scheduling the second RMSI has a TBS index in a range of 0 to 10, and a PDCCH for scheduling the second RMSI has a TBS index in a range of 15 to 26. In this way, the transmission accuracy of the PDCCH for scheduling the second RMSI may be guaranteed, and when the second type of UE receives the PDCCH for scheduling the second RMSI, and it may be easier for the second type of UE to demodulate the second RMSI, thus improving the accuracy of demodulating the PDCCH for scheduling the second RMSI. For the first type of UE, since real-time requirements for data transmission are relatively low, a higher modulation order or a larger TBS index may be used, so that the PDCCH for scheduling the first RMSI may carry more data.

A time interval between a PDCCH and a PDSCH for scheduling the first RMSI is shorter than a time interval between a PDCCH and a PDSCH for scheduling the second RMSI. For example, the time interval between the PDCCH and the PDSCH for scheduling the second RMSI is 1 to 3 OFDM symbols, and the time interval between the PDCCH and the PDSCH for scheduling the first RMSI is 0 to 2 OFDM symbols. Similarly, in order to ensure the network access success rate of the second type of UE, the time interval between the PDCCH and the PDSCH for scheduling the second RMSI is relatively longer, so that after the second type of UE monitors the PDCCH, the second type of UE may monitor the PDSCH on the corresponding time frequency resources based on scheduling information in the PDCCH. Since the interval between the PDCCH and the PDSCH is longer, the second RMSI may be accurately obtained. For the first type of UE, since the requirements for network access are lower, the time interval between the PDCCH and the PDSCH for scheduling the first RMSI may be shorter.

In embodiments of the present disclosure, a control resource set (CORESET) carrying the PDCCH for scheduling the first RMSI is the same as a CORESET carrying the PDCCH for scheduling the second RMSI. Physical resources carrying the PDCCH for the first RMSI and physical resources carrying the PDCCH for the second RMSI may be located in the same CORESET. That is, the same CORESET resource may be used for carrying the PDCCH or DCI parameters of the first RMSI and the second RMSI simultaneously.

When the CORESET carrying the first RMSI are the same as the CORESET for carrying the second RMSI, the PDCCH for scheduling the first RMSI and the PDCCH for scheduling the second RMSI may be distinguished in the following manner.

In a manner, an aggregation degree of the PDCCH for scheduling the second RMSI is different from an aggregation degree of the PDCCH for scheduling the first RMSI. For example, the aggregation degree of the PDCCH for scheduling the second RMSI is higher than the aggregation degree of the PDCCH for scheduling the first RMSI. If it is only intended to distinguish the PDCCH for scheduling the first RMSI from the PDCCH for scheduling the second RMSI without considering the transmission efficiency, the aggregation degree of the PDCCH for scheduling the second RMSI may be lower than the PDCCH for scheduling the first RMSI.

In a manner, candidate transmission resources determined for the PDCCH for scheduling the second RMSI are different from candidate transmission resources determined for the PDCCH for scheduling the first RMSI. The different candidate transmission resources may be determined for the PDCCH for scheduling the second RMSI and the PDCCH for scheduling the first RMSI, so that the first type of UE and the second type of UE may monitor respective RMSI scheduling information on different transmission resources.

In a manner, a length of downlink control information (DCI) for scheduling the second RMSI is different from a length of DCI for scheduling the first RMSI. For example, the length of the DCI for scheduling the second RMSI may be 16 bits, and the length of the DCI for scheduling the second RMSI may be 8 bits. The length of the DCI for scheduling the second RMSI may be different from the length of the DCI for scheduling the first RMSI, so that in the same CORESET, the DCIs with different lengths may be used to distinguish which DCI carries the scheduling information for the first RMSI or the scheduling information for the second RMSI.

In a manner, a scrambling code of DCI for scheduling the second RMSI is different from a scrambling code of DCI for scheduling the first RMSI. Different scrambling codes may be provided for the DCI for the second RMSI and the DCI for the first RMSI, and the first type of UE and the second type of UE respectively use the scrambling codes configured by themselves to decode the DCIs. If a UE decodes a DCI successfully, the DCI is a DCI corresponding to the UE itself. In this way, the first type of UE decodes the DCI to obtain the scheduling information for the first RMSI, and the second type of UE decodes the DCI to obtain the scheduling information for the second RMSI.

In embodiments of the present disclosure, a CORESET carrying a PDCCH for scheduling the first RMSI is different from a CORESET carrying a PDCCH for scheduling the second RMSI. That is, the CORESET for the PDCCH for scheduling the first RMSI is different from the CORESET for the PDCCH for scheduling the second RMSI, so that the first type of UE and the second type of UE may monitor their own PDCCHs on different transmission resources to obtain the scheduling information for their own RMSIs and monitor their own RMSIs on the corresponding resources.

In embodiments of the present disclosure, information carried in a PDSCH for scheduling the first RMSI is at least partially different from information carried in a PDSCH for scheduling the second RMSI. Information content in the PDSCH carrying the first RMSI is at least partially different from information content in the PDSCH carrying the second RMSI. Since the first RMSI is different from the second RMSI, the information in the PDSCH carrying the first RMSI is different from the information in the PDSCH carrying the second RMSI.

In embodiments of the present disclosure, two types of RMSIs are provided, and carrying modes and transmission modes of the two types of RMSIs are respectively configured, so that the two types of RMSIs are respectively applicable to different UEs. The UE may monitor the corresponding RMSI and perform random access according to the type of the UE itself or a current channel transmission quality. In embodiments of the present disclosure, the corresponding RMSIs may be broadcasted to different terminals for their access characteristics, which increases the system access capacity and improves the access efficiency of the UE.

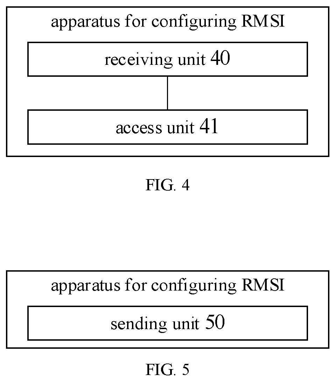

FIG. 4 is a schematic diagram illustrating an apparatus for configuring RMSI according to an illustrative embodiment. As shown in FIG. 4, the apparatus for configuring the RMSI in embodiments of the present disclosure includes a receiving unit 40 and an access unit 41.

The receiving unit 40 is configured to receive first configuration information. The first configuration information includes configuration information for first RMSI and configuration information for second RMSI. The configuration information for the first RMSI is configuration information for RMSI for a first type of UE, and the configuration information for the second RMSI is configuration information for RMSI for a second type of UE.

The access unit 41 is configured to perform initial access based on the configuration information for the first RMSI or the configuration information for the second RMSI.

In an embodiment, a processing capability of the first type of UE is different from a processing capability of the second type of UE, and/or a coverage capability of the first type of UE is different from a coverage capability of the second type of UE.

In an embodiment, an aggregation degree of a PDCCH for scheduling the second RMSI is higher than an aggregation degree of a PDCCH for scheduling the first RMSI.

In an embodiment, a PDCCH for scheduling the second RMSI uses a repeated transmission mechanism, and a PDCCH for scheduling the first RMSI does not use a repeated transmission mechanism; or the number of repeated transmissions in a PDCCH for scheduling the first RMSI is less than the number of repeated transmissions in a PDCCH for scheduling the second RMSI.

A TBS of a PDCCH for scheduling the second RMSI is smaller than a TBS of a PDCCH for scheduling the first RMSI, and/or a modulation order of a PDCCH for scheduling the second RMSI is lower than a modulation order of a PDCCH for scheduling the first RMSI; or a time interval between a PDCCH and a PDSCH for scheduling the first RMSI is shorter than a time interval between a PDCCH and a PDSCH for scheduling the second RMSI.

In an embodiment, a PDSCH for scheduling the second RMSI uses a repeated transmission mechanism, and a PDSCH for scheduling the first RMSI does not use a repeated transmission mechanism; or the number of repeated transmissions in a PDSCH for scheduling the first RMSI is less than the number of repeated transmissions in a PDSCH for scheduling the second RMSI.

In an embodiment, a CORESET carrying a PDCCH for scheduling the first RMSI is the same as a CORESET carrying a PDCCH for scheduling the second RMSI.

In an embodiment, an aggregation degree of the PDCCH for scheduling the second RMSI is different from an aggregation degree of the PDCCH for scheduling the first RMSI; or in the CORESET, candidate transmission resources determined for the PDCCH for scheduling the second RMSI are different from candidate transmission resources determined for the PDCCH for scheduling the first RMSI; or a length of DCI for scheduling the second RMSI is different from a length of DCI for scheduling the first RMSI; or a scrambling code of DCI for scheduling the second RMSI is different from a scrambling code of DCI for scheduling the first RMSI.

In an embodiment, a CORESET carrying a PDCCH for scheduling the first RMSI is different from a CORESET carrying a PDCCH for scheduling the second RMSI.

In an embodiment, information carried in a PDSCH for scheduling the first RMSI is at least partially different from information carried in a PDSCH for scheduling the second RMSI.

In an embodiment, the receiving unit 40 is further configured to receive the configuration information for the first RMSI or the configuration information for the second RMSI according to a type of the UE or a channel condition, and perform the initial access according to the configuration information for the first RMSI or the configuration information for the second RMSI. Alternatively, the receiving unit 40 is further configured to receive the configuration information for the second RMSI, and the access unit 41 is further configured to perform the initial access according to the configuration information for the second RMSI.

In an embodiment, the receiving unit 40 and the access unit 41 may be implemented by one or more central processing units (CPUs), graphics processing units (GPUs), baseband processors (BPs), application specific integrated circuits (ASICs), DSPs, programmable logic devices (PLDs), complex programmable logic devices (CPLDs), field-programmable gate arrays (FPGAs), general-purpose processors, controllers, microcontroller units (MCUs), microprocessors, or other electronic elements, and may also be implemented in combination with one or more radio frequency (RF) antennas, for performing the above-mentioned method for configuring the RMSI.

In embodiments of the present disclosure, the specific manners in which each unit in the apparatus for configuring the RMSI shown in FIG. 4 performs operations have been described in detail in embodiments regarding the method, and will not be described in detail here.

FIG. 5 is a schematic diagram illustrating an apparatus for configuring RMSI according to an illustrative embodiment. As shown in FIG. 5, the apparatus for configuring the RMSI in embodiments of the present disclosure includes a sending unit 50.

The sending unit 50 is configured to send first configuration information to a UE. The first configuration information includes configuration information for first RMSI and configuration information for second RMSI. The configuration information for the first RMSI is configuration information for RMSI for a first type of UE, and the configuration information for the second RMSI is configuration information for RMSI for a second type of UE.

In an embodiment, a processing capability of the first type of UE is different from a processing capability of the second type of UE, and/or a coverage capability of the first type of UE is different from a coverage capability of the second type of UE.

In an embodiment, an aggregation degree of a PDCCH for scheduling the second RMSI is higher than an aggregation degree of a PDCCH for scheduling the first RMSI.

In an embodiment, a PDCCH for scheduling the second RMSI uses a repeated transmission mechanism, and a PDCCH for scheduling the first RMSI does not use a repeated transmission mechanism; or the number of repeated transmissions in a PDCCH for scheduling the first RMSI is less than the number of repeated transmissions in a PDCCH for scheduling the second RMSI.

A TBS of a PDCCH for scheduling the second RMSI is smaller than a TBS of a PDCCH for scheduling the first RMSI, and/or a modulation order of a PDCCH for scheduling the second RMSI is lower than a modulation order of a PDCCH for scheduling the first RMSI; or a time interval between a PDCCH and a PDSCH for scheduling the first RMSI is shorter than a time interval between a PDCCH and a PDSCH for scheduling the second RMSI.

In an embodiment, a PDSCH for scheduling the second RMSI uses a repeated transmission mechanism, and a PDSCH for scheduling the first RMSI does not use a repeated transmission mechanism; or the number of repeated transmissions in a PDSCH for scheduling the first RMSI is less than the number of repeated transmissions in a PDSCH for scheduling the second RMSI.

In an embodiment, a CORESET carrying a PDCCH for scheduling the first RMSI is the same as a CORESET carrying a PDCCH for scheduling the second RMSI.

In an embodiment, an aggregation degree of the PDCCH for scheduling the second RMSI is different from an aggregation degree of the PDCCH for scheduling the first RMSI; or in the CORESET, candidate transmission resources determined for the PDCCH for scheduling the second RMSI are different from candidate transmission resources determined for the PDCCH for scheduling the first RMSI; or a length of DCI for scheduling the second RMSI is different from a length of DCI for scheduling the first RMSI; or a scrambling code of DCI for scheduling the second RMSI is different from a scrambling code of DCI for scheduling the first RMSI.

In an embodiment, a CORESET carrying a PDCCH for scheduling the first RMSI is different from a CORESET carrying a PDCCH for scheduling the second RMSI.

In an embodiment, information carried in a PDSCH for scheduling the first RMSI is at least partially different from information carried in a PDSCH for scheduling the second RMSI.

In an illustrative embodiment, the sending unit 50 and the like may be implemented by one or more central processing units (CPUs), graphics processing units (GPUs), baseband processors (BPs), application specific integrated circuits (ASICs), DSPs, programmable logic devices (PLDs), complex programmable logic devices (CPLDs), field-programmable gate arrays (FPGAs), general-purpose processors, controllers, microcontroller units (MCUs), microprocessors, or other electronic elements, and may also be implemented in combination with one or more radio frequency (RF) antennas, for performing the above-mentioned method for configuring the RMSI.

In embodiments of the present disclosure, the specific manners in which each unit in the apparatus for configuring the RMSI shown in FIG. 5 performs operations have been described in detail in the embodiments regarding the method, and will not be described in detail here.

In embodiments of the present disclosure, two types of RMSIs are provided, and carrying modes and transmission modes of the two types of RMSIs are respectively configured, so that the two types of RMSIs are respectively applicable to different UEs. The UE may monitor the corresponding RMSI and perform random access according to the type of the UE itself or a current channel transmission quality. In embodiments of the present disclosure, the corresponding RMSIs may be broadcasted to different terminals for their access characteristics, which increases the system access capacity and improves the access efficiency of the UE.

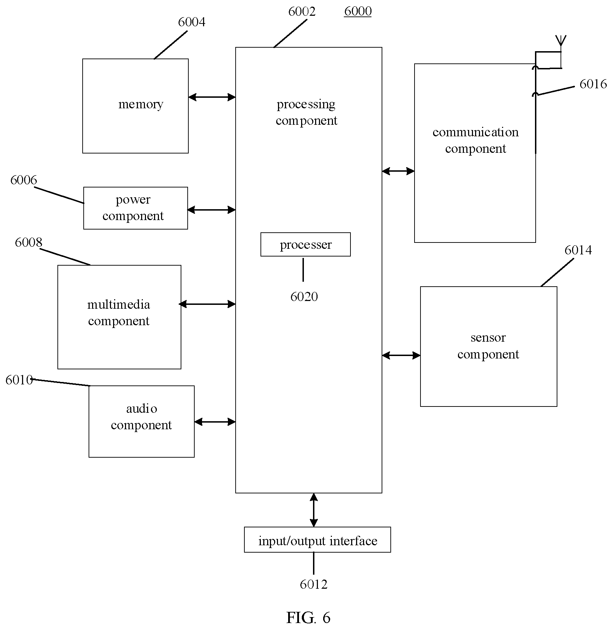

FIG. 6 is a block diagram illustrating a user equipment 6000 according to an illustrative embodiment. For example, the user equipment 6000 may be a mobile phone, a computer, a digital broadcast user equipment, a messaging device, a game console, a tablet device, a medical device, a fitness device, a personal digital assistant, or the like.

As shown in FIG. 6, the user equipment 6000 may include one or more of the following components: a processing component 6002, a memory 6004, a power component 6006, a multimedia component 6008, an audio component 6010, an input/output (I/O) interface 6012, a sensor component 6014, and a communication component 6016.

The processing component 6002 typically controls overall operations of the user equipment 6000, such as the operations associated with display, telephone calls, data communications, camera operations, and recording operations. The processing component 6002 may include one or more processors 6020 to execute instructions to perform all or some of the steps in the above-mentioned method. Moreover, the processing component 6002 may include one or more modules which facilitate the interaction between the processing component 6002 and other components. For example, the processing component 6002 may include a multimedia module to facilitate the interaction between the multimedia component 6008 and the processing component 6002.

The memory 6004 is configured to store various types of data to support the operation of the user equipment 6000. Examples of such data include instructions for any applications or methods operated on the user equipment 6000, contact data, phonebook data, messages, pictures, videos, etc. The memory 6004 may be implemented using any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The communication component 6016 is configured to facilitate communication, wired or wireless, between the user equipment 6000 and other devices. The user equipment 6000 may access a wireless network based on communication standards, such as Wi-Fi, 2G or 3G, or a combination thereof. In one illustrative embodiment, the communication component 6016 receives a broadcast signal or broadcast associated information from an external broadcast management system via a broadcast channel. In one illustrative embodiment, the communication component 6016 further includes a near field communication (NFC) module to facilitate short-range communication. For example, the NFC module may be implemented based on a radio frequency identification (RFID) technology, an infrared data association (IrDA) technology, an ultra-wide band (UWB) technology, a Bluetooth (BT) technology, and other technologies.

In illustrative embodiments, the user equipment 6000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method for configuring the RMSI.

In illustrative embodiments, there is also provided a non-transitory computer-readable storage medium including instructions, such as included in the memory 6004, executable by the processor 6020 in the user equipment 6000, for performing the above-mentioned method for configuring the RMSI. For example, the non-transitory computer-readable storage medium may be a ROM, a random access memory (RAM), a CD-ROM, a magnetic tape, a floppy disc, an optical data storage device, and the like.

Embodiments of the present disclosure also provide a network device, including a processor, a transceiver, a memory, and an executable program stored in the memory and capable of being run by the processor. The processor is configured to execute steps of the method for configuring the RMSI according to the above-mentioned embodiments when running the executable program.

Embodiments of the present disclosure also provide a user equipment, including a processor, a transceiver, a memory, and an executable program stored in the memory and capable of being run by the processor. The processor is configured to execute steps of the method for configuring the RMSI according to the above-mentioned embodiments when running the executable program.

Embodiment of the present disclosure also provide a storage medium. The storage medium has stored therein executable programs that, when executed by a processor, cause steps of the method for configuring the RMSI according to the above-mentioned embodiments to be implemented.

It is intended that the scope of embodiments of the present disclosure only be limited by the appended claims.

## Claims

1. A method for configuring remaining minimum system information, RMSI, performed by a user equipment, UE, comprising:
receiving (201), from a network device, first configuration information, wherein the first configuration information comprises configuration information for first RMSI and configuration information for second RMSI; wherein the configuration information for the first RMSI is configuration information for RMSI for a first type of UE, and the configuration information for the second RMSI is configuration information for RMSI for a second type of UE; and
performing (202), initial access based on the configuration information for the first RMSI or the configuration information for the second RMSI,
**characterized in that**:
a transport block size, TBS, of a PDCCH for scheduling the second RMSI is smaller than a TBS of a PDCCH for scheduling the first RMSI, and/or a modulation order of a PDCCH for scheduling the second RMSI is lower than a modulation order of a PDCCH for scheduling the first RMSI; or
a time interval between a PDCCH and a physical downlink shared channel, PDSCH for scheduling the first RMSI is shorter than a time interval between a PDCCH and a PDSCH for scheduling the second RMSI.

2. The method according to claim 1, wherein a processing capability of the first type of UE is different from a processing capability of the second type of UE, and/or a coverage capability of the first type of UE is different from a coverage capability of the second type of UE.

3. The method according to claim 1 or 2, wherein an aggregation degree of the physical downlink control channel, PDCCH, for scheduling the second RMSI is higher than an aggregation degree of the PDCCH for scheduling the first RMSI.

4. The method according to any one of claims 1 to 3, wherein the PDCCH for scheduling the second RMSI uses a repeated transmission mechanism, and the PDCCH for scheduling the first RMSI does not use a repeated transmission mechanism; or a number of repeated transmissions in the PDCCH for scheduling the first RMSI is less than a number of repeated transmissions in the PDCCH for scheduling the second RMSI.

5. The method according to any one of claims 1 to 4, wherein the PDSCH for scheduling the second RMSI uses a repeated transmission mechanism, and the PDSCH for scheduling the first RMSI does not use a repeated transmission mechanism; or a number of repeated transmissions in the PDSCH for scheduling the first RMSI is less than a number of repeated transmissions in the PDSCH for scheduling the second RMSI.

6. The method according to any one of claims 1 to 5, wherein a control resource set, CORESET, carrying the PDCCH for scheduling the first RMSI is the same as a CORESET carrying the PDCCH for scheduling the second RMSI.

7. The method according to claim 6, wherein an aggregation degree of the PDCCH for scheduling the second RMSI is different from an aggregation degree of the PDCCH for scheduling the first RMSI; or
in the CORESET, candidate transmission resources determined for the PDCCH for scheduling the second RMSI are different from candidate transmission resources determined for the PDCCH for scheduling the first RMSI; or
a length of downlink control information, DCI, for scheduling the second RMSI is different from a length of DCI for scheduling the first RMSI; or
a scrambling code of DCI for scheduling the second RMSI is different from a scrambling code of DCI for scheduling the first RMSI.

8. The method according to any one of claims 1 to 7, wherein a CORESET carrying the PDCCH for scheduling the first RMSI is different from a CORESET carrying the PDCCH for scheduling the second RMSI.

9. The method according to any one of claims 1 to 8, wherein information carried in the PDSCH for scheduling the first RMSI is at least partially different from information carried in the PDSCH for scheduling the second RMSI.

10. The method according to any one of claims 1 to 8, wherein performing, by the UE, initial access based on the configuration information for the first RMSI or the configuration information for the second RMSI comprises:
receiving, by the UE, the configuration information for the first RMSI or the configuration information for the second RMSI according to a type of the UE or a channel condition, and performing, by the UE, the initial access; or
receiving, by the UE, the configuration information for the second RMSI, and performing, by the UE, the initial access.

11. A method for configuring remaining minimum system information, RMSI, performed by a network device, comprising:
sending (301) first configuration information to a user equipment, UE, wherein the first configuration information comprises configuration information for first RMSI and configuration information for second RMSI; wherein the configuration information for the first RMSI is configuration information for RMSI for a first type of UE, and the configuration information for the second RMSI is configuration information for RMSI for a second type of UE, thereby enabling the UE to perform initial access based on the configuration information for the first RMSI or the configuration for the second RMSI,
**characterized in that**:
a TBS of a PDCCH for scheduling the second RMSI is smaller than a TBS of a PDCCH for scheduling the first RMSI, and/or a modulation order of a PDCCH for scheduling the second RMSI is lower than a modulation order of a PDCCH for scheduling the first RMSI; or
a time interval between a PDCCH and a PDSCH for scheduling the first RMSI is longer than a time interval between a PDCCH and a PDSCH for scheduling the second RMSI.

12. The method according to claim 11, wherein a processing capability of the first type of UE is different from a processing capability of the second type of UE, and/or a coverage capability of the first type of UE is different from a coverage capability of the second type of UE.

13. A user equipment for configuring remaining minimum system information, RMSI, the user equipment configured to perform the method according to any one of claims 1 to 10.

14. A network device for configuring remaining minimum system information, RMSI, the network device configured to perform the method according to any one of claims 11 to 12.

15. A storage medium having stored therein executable programs that, when executed by a processor of a user equipment, cause the user equipment to perform the steps of the method for configuring the RMSI according to any one of claims 1 to 10, or when executed by a processor of a network device, cause the network device to perform the steps of the method for configuring the RMSI according to any one of claims 11 to 12.

## Patentansprüche

1. Verfahren zum Konfigurieren von verbleibenden minimalen Systeminformationen, RMSI, das von einem Benutzerendgerät, UE, durchgeführt wird, umfassend:
Empfangen (201), von einer Netzwerkvorrichtung, von ersten Konfigurationsinformationen, wobei die ersten Konfigurationsinformationen Konfigurationsinformationen für erste RMSI und Konfigurationsinformationen für zweite RMSI umfassen; wobei die Konfigurationsinformationen für die ersten RMSI Konfigurationsinformationen für RMSI für einen ersten Typ von UE sind, und wobei die Konfigurationsinformationen für die zweiten RMSI Konfigurationsinformationen für RMSI für einen zweiten Typ von UE sind; und
Durchführen (202) eines Erstzugriffs auf der Grundlage der Konfigurationsinformationen für die ersten RMSI oder der Konfigurationsinformationen für die zweiten RMSI,
**dadurch gekennzeichnet, dass**:
eine Transportblockgröße, TBS, eines PDCCH für die Planung der zweiten RMSI kleiner ist als eine TBS eines PDCCH für die Planung der ersten RMSI, und/oder eine Modulationsordnung eines PDCCH für die Planung der zweiten RMSI niedriger ist als eine Modulationsordnung eines PDCCH für die Planung der ersten RMSI; oder
ein Zeitintervall zwischen einem PDCCH und einem Physical Downlink Shared Channel, PDSCH, für die Planung der ersten RMSI kürzer ist als ein Zeitintervall zwischen einem PDCCH und einem PDSCH für die Planung der zweiten RMSI.

2. Verfahren nach Anspruch 1, wobei eine Verarbeitungsfähigkeit des ersten UE-Typs sich von einer Verarbeitungsfähigkeit des zweiten UE-Typs unterscheidet und/oder eine Abdeckungsfähigkeit des ersten UE-Typs sich von einer Abdeckungsfähigkeit des zweiten UE-Typs unterscheidet.

3. Verfahren nach Anspruch 1 oder 2, wobei ein Aggregationsgrad des Physical Downlink Shared Channel, PDCCH, für die Planung der zweiten RMSI höher ist als ein Aggregationsgrad des PDCCH für die Planung der ersten RMSI.

4. Verfahren nach einem der Ansprüche 1 bis 3, wobei der PDCCH zur Planung der zweiten RMSI einen Mechanismus zur wiederholten Übertragung verwendet und der PDCCH zur Planung der ersten RMSI keinen Mechanismus zur wiederholten Übertragung verwendet; oder
eine Anzahl wiederholter Übertragungen im PDCCH für die Planung der ersten RMSI kleiner ist als eine Anzahl wiederholter Übertragungen im PDCCH für die Planung der zweiten RMSI.

5. Verfahren nach einem der Ansprüche 1 bis 4, wobei der PDCCH zur Planung der zweiten RMSI einen Mechanismus zur wiederholten Übertragung verwendet und der PDCCH zur Planung der ersten RMSI keinen Mechanismus zur wiederholten Übertragung verwendet; oder
eine Anzahl wiederholter Übertragungen im PDSCH für die Planung der ersten RMSI kleiner ist als eine Anzahl wiederholter Übertragungen im PDSCH für die Planung der zweiten RMSI.

6. Verfahren nach einem der Ansprüche 1 bis 5, wobei ein Control Resource Set, CORESET, der den PDCCH zur Planung der ersten RMSI trägt, derselbe ist wie ein CORESET, der den PDCCH zur Planung der zweiten RMSI trägt.

7. Verfahren nach Anspruch 6, wobei ein Aggregationsgrad des PDCCH für die Planung der zweiten RMSI von einem Aggregationsgrad des PDCCH für die Planung der ersten RMSI verschieden ist; oder
im CORESET die für den PDCCH ermittelten Kandidatenübertragungsressourcen für die Planung der zweiten RMSI von den für den PDCCH ermittelten Kandidatenübertragungsressourcen für die Planung der ersten RMSI verschieden sind; oder
eine Länge der Downlink-Steuerinformationen, DCI, für die Planung der zweiten RMSI von einer Länge der DCI für die Planung der ersten RMSI verschieden ist; oder
ein Scrambling-Code der DCI für die Planung der zweiten RMSI von einem Scrambling-Code der DCI für die Planung der ersten RMSI verschieden ist.

8. Verfahren nach einem der Ansprüche 1 bis 7, wobei ein CORESET, der den PDCCH zur Planung der ersten RMSI trägt, von einem CORESET, der den PDCCH zur Planung der zweiten RMSI trägt, verschieden ist.

9. Verfahren nach einem der Ansprüche 1 bis 8, wobei sich die im PDSCH zur Planung der ersten RMSI getragenen Informationen zumindest teilweise von den Informationen unterscheiden, die im PDSCH zur Planung der zweiten RMSI getragen werden.

10. Verfahren nach einem der Ansprüche 1 bis 8, wobei das Durchführen des Erstzugriffs mittels des UE auf der Grundlage der Konfigurationsinformationen für die ersten RMSI oder der Konfigurationsinformationen für die zweiten RMSI umfasst:
Empfangen der Konfigurationsinformation für die ersten RMSI oder der Konfigurationsinformation für die zweiten RMSI mittels des UE entsprechend einem Typ des UE oder einer Kanalbedingung, und Durchführen des Erstzugriffs mittels des UE; oder
Empfangen der Konfigurationsinformation für die zweiten RMSI mittels des UE, und Durchführen des Erstzugriffs mittels des UE.

11. Verfahren zum Konfigurieren von verbleibenden minimalen Systeminformationen, RMSI, das von einer Netzwerkvorrichtung durchgeführt wird, umfassend:
Senden (301) von ersten Konfigurationsinformationen an ein Benutzerendgerät, UE, wobei die ersten Konfigurationsinformationen Konfigurationsinformationen für erste RMSI und Konfigurationsinformationen für zweite RMSI umfassen; wobei die Konfigurationsinformation für die ersten RMSI Konfigurationsinformationen für RMSI für einen ersten Typ von UE ist, und wobei die Konfigurationsinformation für die zweiten RMSI Konfigurationsinformationen für RMSI für einen zweiten Typ von UE ist, wodurch das UE in die Lage versetzt wird, den Erstzugriff auf der Grundlage der Konfigurationsinformation für die ersten RMSI oder der Konfigurationsinformation für die zweiten RMSI durchzuführen,
**dadurch gekennzeichnet, dass**:
eine TBS eines PDCCH für die Planung der zweiten RMSI kleiner ist als eine TBS eines PDCCH für die Planung der ersten RMSI, und/oder eine Modulationsordnung eines PDCCH für die Planung der zweiten RMSI niedriger ist als eine Modulationsordnung eines PDCCH für die Planung der ersten RMSI; oder
ein Zeitintervall zwischen einem PDCCH und einem PDSCH für die Planung der ersten RMSI länger ist als ein Zeitintervall zwischen einem PDCCH und einem PDSCH für die Planung der zweiten RMSI.

12. Verfahren nach Anspruch 11, wobei eine Verarbeitungsfähigkeit des ersten UE-Typs sich von einer Verarbeitungsfähigkeit des zweiten UE-Typs unterscheidet und/oder eine Abdeckungsfähigkeit des ersten UE-Typs sich von einer Abdeckungsfähigkeit des zweiten UE-Typs unterscheidet.

13. Benutzerendgerät zum Konfigurieren von verbleibenden minimalen Systeminformationen, RMSI, wobei das Benutzerendgerät so ausgebildet ist, dass es das Verfahren nach einem der Ansprüche 1 bis 10 durchführt.

14. Netzwerkvorrichtung zum Konfigurieren von verbleibenden minimalen Systeminformationen, RMSI, wobei die Netzwerkvorrichtung so ausgebildet ist, dass sie das Verfahren nach einem der Ansprüche 11 bis 12 durchführt.

15. Speichermedium, auf dem ausführbare Programme gespeichert sind, die, wenn sie von einem Prozessor eines Benutzerendgeräts ausgeführt werden, das Benutzerendgeräts veranlassen, die Schritte des Verfahrens zum Konfigurieren der RMSI nach einem der Ansprüche 1 bis 10 durchzuführen, oder, wenn sie von einem Prozessor einer Netzwerkvorrichtung ausgeführt werden, die Netzwerkvorrichtung veranlassen, die Schritte des Verfahrens zum Konfigurieren der RMSI nach einem der Ansprüche 11 bis 12 durchzuführen.

## Revendications

1. Procédé de configuration d'informations du système minimales restantes, dites RMSI, mis en œuvre par un équipement d'utilisateur, dit UE, comprenant les étapes consistant à :
recevoir (201), en provenance d'un dispositif de réseau, des premières informations de configuration, dans lequel les premières informations de configuration comprennent des informations de configuration de premières RMSI et des informations de configuration de secondes RMSI ; dans lequel les informations de configuration des premières RMSI sont des informations de configuration de RMSI d'un premier type d'UE, et les informations de configuration des secondes RMSI sont des informations de configuration de RMSI d'un second type d'UE ; et
exécuter (202) un accès initial sur la base des informations de configuration des premières RMSI ou des informations de configuration des secondes RMSI,
**caractérisé en ce que** :
une taille de bloc de transport, dite TBS, d'un PDCCH de planification des secondes RMSI est inférieure à une TBS d'un PDCCH de planification des premières RMSI, et/ou un ordre de modulation d'un PDCCH de planification des secondes RMSI est inférieur à un ordre de modulation d'un PDCCH de planification des premières RMSI ; ou
un intervalle de temps entre un PDCCH et un canal physique de liaison descendante partagé, dit PDSCH, de planification des premières RMSI est plus court qu'un intervalle de temps entre un PDCCH et un PDSCH de planification des secondes RMSI.

2. Procédé selon la revendication 1, dans lequel une capacité de traitement du premier type d'UE est différente d'une capacité de traitement du second type d'UE, et/ou une capacité de couverture du premier type d'UE est différente d'une capacité de couverture du second type d'UE.

3. Procédé selon la revendication 1 ou la revendication 2, dans lequel un degré d'agrégation du canal physique de commande de liaison descendante, dit PDCCH, de planification des secondes RMSI est supérieur à un degré d'agrégation du PDCCH de planification des premières RMSI.

4. Procédé selon l'une quelconque des revendications 1 à 3, dans lequel le PDCCH de planification des secondes RMSI utilise un mécanisme de transmissions répétées, et le PDCCH de planification des premières RMSI n'utilise pas de mécanisme de transmissions répétées ; ou
un nombre de transmissions répétées dans le PDCCH de planification des premières RMSI est inférieur à un nombre de transmissions répétées dans le PDCCH de planification des secondes RMSI.

5. Procédé selon l'une quelconque des revendications 1 à 4, dans lequel le PDSCH de planification des secondes RMSI utilise un mécanisme de transmissions répétées, et le PDSCH de planification des premières RMSI n'utilise pas de mécanisme de transmissions répétées ; ou
un nombre de transmissions répétées dans le PDSCH de planification des premières RMSI est inférieur à un nombre de transmissions répétées dans le PDSCH de planification des secondes RMSI.

6. Procédé selon l'une quelconque des revendications 1 à 5, dans lequel un ensemble de ressources de commande, dit CORESET, véhiculant le PDCCH de planification des premières RMSI est le même qu'un CORESET véhiculant le PDCCH de planification des secondes RMSI.

7. Procédé selon la revendication 6, dans lequel un degré d'agrégation du PDCCH de planification des secondes RMSI est différent d'un degré d'agrégation du PDCCH de planification des premières RMSI ; ou
dans le CORESET, des ressources de transmission candidates déterminées pour le PDCCH de planification des secondes RMSI sont différentes de ressources de transmission candidates déterminées pour le PDCCH de planification des premières RMSI ; ou
une longueur d'informations de commande de liaison descendante, dites DCI, de planification des secondes RMSI est différente d'une longueur de DCI de planification des premières RMSI ; ou
un code d'embrouillage de DCI de planification des secondes RMSI est différent d'un code d'embrouillage de DCI de planification des premières RMSI.

8. Procédé selon l'une quelconque des revendications 1 à 7, dans lequel un CORESET véhiculant le PDCCH de planification des premières RMSI est différent d'un CORESET véhiculant le PDCCH de planification des secondes RMSI.

9. Procédé selon l'une quelconque des revendications 1 à 8, dans lequel des informations véhiculées dans le PDSCH de planification des premières RMSI sont au moins partiellement différentes d'informations véhiculées dans le PDSCH de planification des secondes RMSI.

10. Procédé selon l'une quelconque des revendications 1 à 8, dans lequel l'étape d'exécution, par l'UE, d'un accès initial sur la base des informations de configuration des premières RMSI ou des informations de configuration des secondes RMSI consiste à :
recevoir, par l'UE, les informations de configuration des premières RMSI ou les informations de configuration des secondes RMSI conformément à un type de l'UE ou à une condition de canal, et exécuter, par l'UE, l'accès initial ; ou
recevoir, par l'UE, les informations de configuration des secondes RMSI, et exécuter, par l'UE, l'accès initial.

11. Procédé de configuration d'informations du système minimales restantes, dites RMSI, mis en œuvre par un dispositif de réseau, comprenant l'étape consistant à :
envoyer (301) des premières informations de configuration à un équipement d'utilisateur, dit UE, dans lequel les premières informations de configuration comprennent des informations de configuration de premières RMSI et des informations de configuration de secondes RMSI ; dans lequel les informations de configuration des premières RMSI sont des informations de configuration de RMSI d'un premier type d'UE, et les informations de configuration des secondes RMSI sont des informations de configuration de RMSI d'un second type d'UE, permettant ainsi à l'UE d'exécuter un accès initial sur la base des informations de configuration des premières RMSI ou de la configuration des secondes RMSI,
**caractérisé en ce que** :
une TBS d'un PDCCH de planification des secondes RMSI est inférieure à une TBS d'un PDCCH de planification des premières RMSI, et/ou un ordre de modulation d'un PDCCH de planification des secondes RMSI est inférieur à un ordre de modulation d'un PDCCH de planification des premières RMSI ; ou
un intervalle de temps entre un PDCCH et un PDSCH de planification des premières RMSI est plus long qu'un intervalle de temps entre un PDCCH et un PDSCH de planification des secondes RMSI.

12. Procédé selon la revendication 11, dans lequel une capacité de traitement du premier type d'UE est différente d'une capacité de traitement du second type d'UE, et/ou une capacité de couverture du premier type d'UE est différente d'une capacité de couverture du second type d'UE.

13. Équipement d'utilisateur destiné à configurer des informations du système minimales restantes, dites RMSI, l'équipement d'utilisateur étant configuré pour mettre en œuvre le procédé selon l'une quelconque des revendications 1 à 10.

14. Dispositif de réseau destiné à configurer des informations du système minimales restantes, dites RMSI, le dispositif de réseau étant configuré pour mettre en œuvre le procédé selon l'une ou l'autre des revendications 11 et 12.

15. Support d'informations comportant, mémorisés en son sein, des programmes exécutables qui, lorsqu'ils sont exécutés par un processeur d'un équipement d'utilisateur, amènent l'équipement d'utilisateur à mettre en œuvre les étapes du procédé de configuration des RMSI selon l'une quelconque des revendications 1 à 10, ou qui, lorsqu'ils sont exécutés par un processeur d'un dispositif de réseau, amènent le dispositif de réseau à mettre en œuvre les étapes du procédé de configuration des RMSI selon l'une ou l'autre des revendications 11 et 12.
